# EUROPEAN PATENT SPECIFICATION

(11) **EP 1 642 695 B1**
(45) Date of publication and mention of the grant of the patent: **21.08.2013**
(21) Application number: 04747228.7
(22) Date of filing: 02.07.2004
(51) Int. Cl.: B29C 35/16, B29D 30/00

(54) **APPARATUS AND METHOD FOR VULCANIZING TIRE**
VORRICHTUNG UND VERFAHREN ZUR REIFENVULKANISIERUNG
APPAREIL ET PROCEDE DE VULCANISATION DE PNEUMATIQUES

(30) Priority: 04.07.2003 JP 2003191657
(43) Date of publication of application: 05.04.2006
(73) Proprietor: Bridgestone Corporation, Tokyo 104-8340 (JP)
(72) Inventor: Toyoda, Haruo, c/o Bridgestone Corporation, Kodaira-shi, Tokyo 1878531 (JP); Oobayashi, Akio, c/o Bridgestone Corporation, Kodaira-shi, Tokyo 1878531 (JP)
(74) Representative: Waldren, Robin Michael
(86) International application number: PCT/JP2004/009760
(87) International publication number: WO 2005/002822

(56) References cited:
- EP-A2- 1 215 024
- JP-A- 4 298 331
- JP-A- 5 116 148
- JP-A- 5 177 637
- JP-A- 9 029 748
- US-B1- 6 322 342
- US-B1- 6 499 980

## Description

### TECHNICAL FIELD

The invention relates to a tire vulcanizing system, and a method for vulcanizing a tire, and more particularly, to a tire vulcanizing system capable of attaching a vulcanized tire to a post-cure inflator (hereinafter referred to as PCI) in such a way as to improve radial force variation (hereinafter referred to as RFV) at the time of inflating the vulcanized tire at the PCI, and a method for vulcanizing a tire.

### BACKGROUND TECHNOLOGY

Uniformity, which is an indicator having vital influence on determination of whether or not tire performance is excellent, is an important quality evaluation standard. In particular, an RFV value (a variation value of force in the radial direction when a tire is pressed to a rotating drum to add a load to the tire, and the tire is rotated in a condition where an interval between the tire and an axle is fixed) has a large effect on tire's driving stability, and ride comfort such as vibration, noise, and so forth, so that quality control is carried out in tire production so as to keep the RFV value within a given standard value. In the past, a product tire after completion of vulcanization, and PCI processes has been fitted to a uniformity-testing machine for measurement of the RFV value, thereby determining whether the product tire is a pass or fail. A failed product tire with the RFV value in excess of the standard value is either discarded, or a modification process to cause the RFV to fall within the standard value is applied thereto. As a product tire yield has large impacts on production cost, various countermeasures for enhancement of the uniformity during a process of tire production have since been introduced.

There is available a method, not in Patent Document, whereby dimensions of a green tire molded by a tire molding machine are measured to find nonuniformity (hereinafter referred to as RR) of the dimensions, in the radial direction, and the green tire is set in the direction of a characteristic of a vulcanizer mold, on the basis of a value of the RR, to thereby enhance the uniformity. Determination on quality of the green tire, as a result of application of the method, is made by fitting a product tire after completion of vulcanization, and the PCI process to the uniformity-testing machine to thereby measure a RFV value.

A technology disclosed in JP 2001 - 162622 A (Patent Document 1) is concerned with a method and a system for modifying RFV of a vulcanized tire in the PCI process. In a condition where a reference position of an un-vulcanized tire is caused to coincide with a reference position of a die beforehand, vulcanization molding and the PCI process are applied to a multitude of un-vulcanized tires prior to the start of production. Respective RFV values of all pieces of product tires after completion of the PCI process are measured, and angles between the reference position of the die, and respective tire positions each indicating the maximum RFV value of a product tire to thereby store data on the angles in a memory. In the condition where the respective reference positions of the un-vulcanized tires are caused to coincide with the reference position of the die, a vulcanizing process is applied during production. Upon completion of the vulcanizing process, vulcanized tires are fitted to the PCI, and upon completion of inflating at the PCI, the respective peripheries of the vulcanized tires at respective angle positions indicating the maximum RFV, based on the data of the memory, are pressed with a pressing plate for a given time length. As a result, the radius of the periphery of the vulcanized tire at pressed part is decreased to thereby modify RFV during the PCI process.

With the conventional technology described as above, and the technology of Patent Document 1, no consideration has been given at all to an attached positional relationship between the vulcanized tire in the PCI process, and a rim of the PCI to which the tire is set. Accordingly, a tire vulcanizing system as a whole, including a vulcanizer, PCI, and transfer device, has been found lacking a viewpoint of enhancing the uniformity of the product tire, and is therefore unsatisfactory as a technology for enabling the tire vulcanizing system to enhance the uniformity.

EP 1215024 discloses a method for producing a pneumatic tire including the general steps of: transferring a green tire into a vulcanizes, and transferring the vulcanized tire from the vulcanizer to a post-cure inflator. Attention is drawn to the disclosures of US 6322342, US 6499980, JP 4298331, JP 9029748, JP 5177637 and JP 5116148.

In view of the problems described in the foregoing, the present invention has been developed, and it is an object of the invention to set the attached positional relationship between the vulcanized tire in the PCI process, and the rim of the PCI, to which the tire is set, so as to become a positional relationship causing the uniformity to be enhanced, thereby enabling RFV to be improved even during inflation in the PCI process.

### DISCLOSURE OF THE INVENTION

A first aspect of the invention is to provide a tire vulcanizing system characterized in comprising a vulcanizer for vulcanizing a green tire, a post cure inflator, and a transfer device for receiving a vulcanized tire from the vulcanizer, and transferring the vulcanized tire to the post cure inflator to be thereby delivered to a rim of the post cure inflator, wherein the transfer device is provided with a means for rotatably holding the vulcanized tire, and is capable of placing the vulcanized tire on a predetermined rotation position on the rim.

A second aspect of the invention is to provide a tire vulcanizing system characterized in that in the first aspect of the invention, the predetermined rotation position is a position where a rim-fitting peak value of the rim of the post cure inflator is caused to match an RFV peak value of the vulcanized tire.

A third aspect of the invention is to provide a tire vulcanizing system characterized in that in the first or second aspect of the invention, the transfer device has a pair of holding means for holding the vulcanized tire, and supports the pair of holding means so as to be rotatable centering round a rotation center axis identical to a rotation center axis of the vulcanized tire, and to be capable of controlling a rotation angular position, thereby controlling the rotation angular position of the pair of holding means to a rotation angular position where the rim-fitting peak value of the rim of the post cure inflator is caused to match the RFV peak value of the vulcanized tire.

A fourth aspect of the invention is to provide a method for vulcanizing a tire, said method is characterized in comprising the step of setting an identical reference position to un-vulcanized tires, the step of finding a deviation between a maximum value position of RFV of product tires, and the reference position, in the circumferential direction, the step of applying a vulcanization process to the un-vulcanized tires in a vulcanizer, and the step of rotating respective vulcanized tires on the basis of the deviation to be thereby placed on a rim of a post cure inflator.

A fifth aspect of the invention is to provide a method for vulcanizing a tire, characterized in that in the fourth aspect of the invention, in the step of rotating respective vulcanized tires on the basis of the deviation to be thereby placed on the rim of the post cure inflator, the respective vulcanized tires are rotated by a rotation angle for causing a rim-fitting peak value of the rim of the post cure inflator to match an RFV peak value of the vulcanized tire.

Effects corresponding to the first to fifth aspects of the invention: The vulcanized tire is rotated by the transfer device for transferring the vulcanized tire from the vulcanizer to the PCI, and the attached positional relationship between the vulcanized tire in the PCI process, and the rim of the PCI, to which the tire is set, can be set so as to become a positional relationship causing the uniformity to be enhanced, thereby enabling RFV of the tire to be improved even when pressurizing and cooling the tire in the PCI, so that it is possible to improve RFV of the tire vulcanizing system as a whole.

### BRIEF DESCRIPTION OF THE DRAWINGS

Fig. 1 is a plan view showing an embodiment of a tire vulcanizing system according to the invention; and
Fig. 2 is an enlarged side view of a transfer device for use in the tire vulcanizing system according to the invention.

### BEST MODE FOR CARRYING OUT THE INVENTION

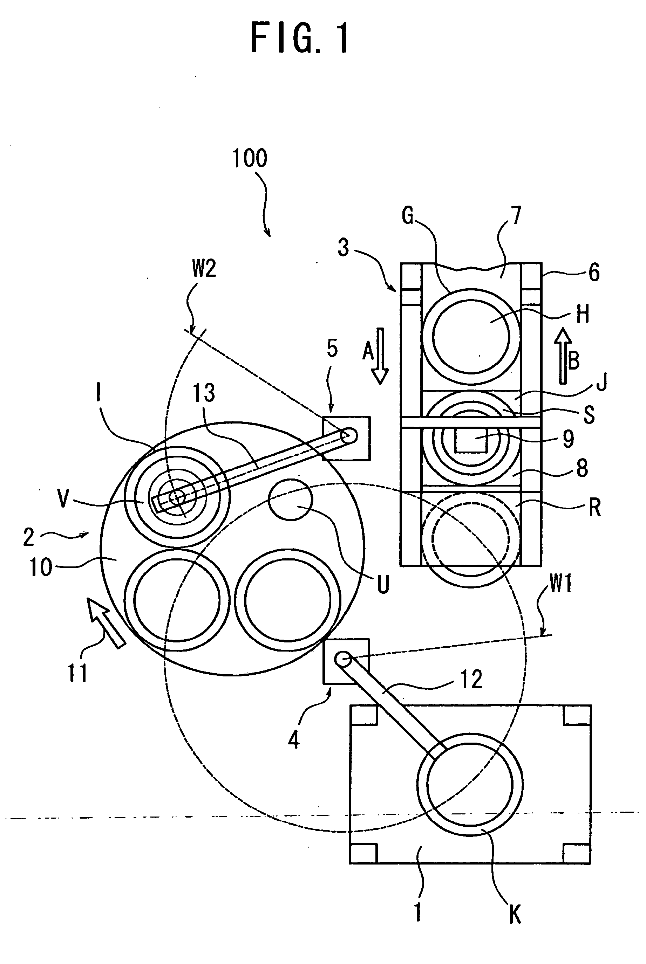

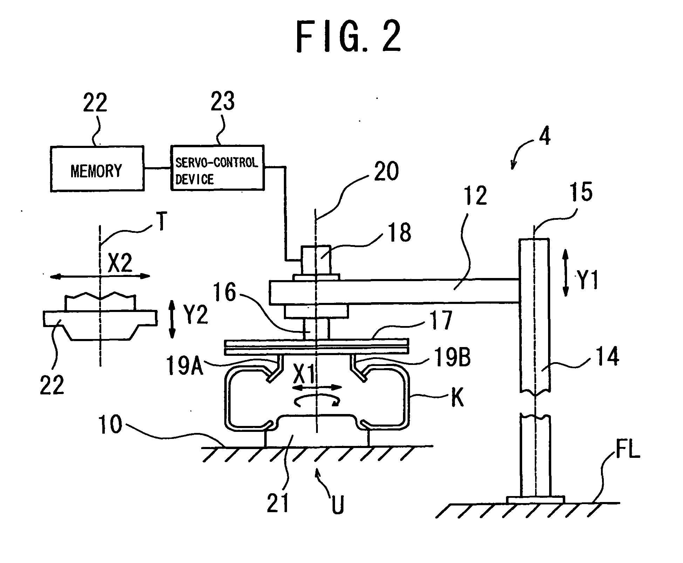

An embodiment of the invention is described hereinafter with reference to the accompanying drawings. Fig. 1 is a plan view of an embodiment of a tire vulcanizing system according to the invention, and Fig. 2 is an enlarged side view of a transfer device for use in the tire vulcanizing system according to the invention. In Fig. 1, a tire vulcanizing system 100 comprises a vulcanizer 1, a PCI (post cure inflator) 2, a transfer conveyer 3, a first transfer device 4, and a second transfer device 5. The transfer conveyer 3 is provided with a fixed frame 6 linearly extending in the vertical direction along the plane of the figure, and is to transfer a green tire G molded by a green tire molder (not shown) disposed on the upper side of the fixed frame 6, laid in a horizontal posture, along a direction pointed by the arrow A while transferring a product tire S after completion of inflating at the PCI 2 along a direction pointed by the arrow B to be thereby sent out to a subsequent step.

The fixed frame 6 is provided with two units of a horizontal upper conveyer 7, and a horizontal lower conveyer 8, disposed so as to be vertically isolated form each other, in the direction perpendicular to the plane of the figure, and the horizontal upper conveyer 7, and the horizontal lower conveyer 8 are transferred along the direction of the fixed frame 6, respectively. The upper conveyer 7 transfers the green tire G in the direction pointed by the arrow A, and positioning of the green tire G is made in a take-in station H at the lower end of the upper conveyer 7.

Meanwhile, the lower conveyer 8 provided on a lower tier side is extended beyond the lower end of the upper conveyer 7 by a length corresponding to substantially the diameter of the green tire G, and receives the product tire S after completion of the inflating at the PCI 2 in a take-out station J at the lower end of the lower conveyer 8, thereafter transferring the product tire S in the direction pointed by the arrow B to a subsequent step. A treatment station R extended in the direction pointed by the arrow A in the figure by a length corresponding to substantially the diameter of the green tire G is disposed over the fixed frame 6 underneath the lower conveyer 8.

Further, in order to prevent deviation of a rotation angle position of the green tire G taken into, or out of the transfer conveyer 3, the upper conveyer 7, the lower conveyer 8, and the treatment station R each are provided with a jig (not shown).

A delivery mechanism 9 for executing delivery of a tire among stations at three locations, that is, the take-in station H, take-out station J, and treatment station R is disposed in the fixed frame 6. The delivery mechanism 9 moves throughout substantially the whole length of the fixed frame 6, in the vertical direction thereof, by being guided with the fixed frame 6. The delivery mechanism 9 has a gripping mechanism (not shown) moving up and down in the direction perpendicular to the plane of the figure, gripping beads on the upper side of the tire from the inner side thereof, in the radial direction.

The delivery mechanism 9 delivers the green tire G in the take-in station H to the treatment station R, and delivers the product tire S after completion of the inflating at the PCI 2 from the treatment station R to the take-out station J.

The PCI 2 disposed on the left side of the transfer conveyer 3 has a rotatable table 10 parallel to the plane of the figure and the rotatable table 10 intermittently undergoes indexing rotation around a vertical shaft by a motor, not shown. The rotatable table 10 has stations disposed at four locations spread at equal angular intervals in the circumferential direction, respectively, and a double-split rim for holding a tire to be subjected to an inflating process is disposed in the respective stations.

A shape of the rim, in detail, will be described later on. The vulcanizer 1 is disposed in the direction toward A in the figure from the transfer conveyer 3. The first transfer device 4 is disposed between the transfer conveyer 3, and the vulcanizer 1 as well as the PCI 2.

Further, the second transfer device 5 is disposed between the PCI 2 and the transfer conveyer 3. The first transfer device 4 receives the green tire G from the treatment station R to transfer the same to the vulcanizer 1. A vulcanized tire K after completion of vulcanization at the vulcanizer 1 is transferred to a receive station U of the PCI 2.

The second transfer device 5 receives an inflated tire I after completion of the inflating at the PCI 2 from a discharge station V of the PCI 2 to be then transferred to the treatment station R. The rotatable table 10 keeps in the condition of stopping rotation during the inflating process, and undergoes 1 / 4 rotation in the direction pointed by the arrow 11 upon the inflated tire I being discharged from the discharge station V into the treatment station R, whereupon positioning of the double-split rim without a tire placed thereon is made in the receive station U. Respective swingable arms 12, 13 of the first transfer device 4, and the second transfer device 5 stand by at respective standby positions W1, W2 all the time so as not to interfere with respective treatment operations of the vulcanizer 1, and the PCI 2.

A detailed configuration of the first transfer device 4 is described hereinafter. Since the second transfer device 5 is similar in configuration to the first transfer device 4, detailed description thereof is omitted.

Fig. 2 is view showing a state where the first transfer device 4 delivers the vulcanized tire K toward the PCI 2 at a position of the receive station U of the PCI 2.

The first transfer device 4 comprises a post 14 erected on a floor surface FL so as to be perpendicular thereto, and the swingable arm 12 provided in the vicinity of the top end of the post 14 so as to be movable in the direction of Y1 (the perpendicular direction). Further, the swingable arm 12 is swingably provided with the center axis of the post 14 as the center of swinging. Hoisting and swinging of the swingable arm 12 are executed by a drive source such as a cylinder motor, not shown, and so forth. A rotation spindle 16 is rotatably supported by the tip of the swingable arm 12 through the intermediary of bearings (not shown), and a rotatable plate 17 is fixed to the lower end of the rotation spindle 16.

The rotation spindle 16 is driven for rotation by a servomotor 18 attached to the top surface of the swingable arm 12. The servomotor 18 is connected to a servo-control device 23 for controlling the servomotor 18, and a memory 22 for storing control data.

A pair of gripper fingers 19A, 19B, serving as a holding means for holding the vulcanized tire, are provided on the underside face of the rotatable plate 17. The gripper fingers 19A, 19B can be opened and closed symmetrically with respect to a rotation center axis 20 of the rotation spindle 16, in the direction of X1, parallel to the rotatable plate 17. The gripper fingers 19A, 19B grip the beads on the upper side of the vulcanized tire K, respectively, from the inner side thereof, in the radial direction. Accordingly, a rotation center axis of the vulcanized tire K coincides with the rotation center axis 20 of the gripper fingers 19A, 19B. Further, the second transfer device 5 can do without a rotation mechanism of the gripper fingers depending on the content of a process in a subsequent step.

One of the double-split rim, that is, a down rim 21 as shown in Fig. 2 is provided in the respective stations disposed at four locations so as to be fixedly attached to the top of the rotatable table 10. An up rim 22 is provided above the rotatable table 10 so as to be movable in the respective direction of Y2, and X2. When the vulcanized tire K is received from the vulcanizer 1 to be taken into the receive station U, the up rim 22 retreats to a retreat position T on the left side in the figure, in the direction of X2, as shown in Fig. 2. After take-in of the vulcanized tire K is completed, and the swingable arm 12 swings from the receive station U toward the treatment station R, the up rim 22 moves rightward in the direction of X2, and downward in the direction of Y2 to press the vulcanized tire K from above, and clamp the vulcanized tire K between the up rim 22, and the down rim 21, thereby securing the vulcanized tire K to the rotatable table 10.

Now, an operation of the tire vulcanizing system structured as described in the foregoing is described hereinafter. In this connection, prior to molding the un-vulcanized tires, decision is made on an identical reference position for total pieces of tires of given dimensions, intended for production, and a mark is affixed to such a reference position described as above.

The decision on the reference position can be made by finding a position having a mutually stable positional relationship between the reference position and a position of the maximum RFV value of the product tire S on the basis of data accumulated thus far.

Having taken a prior-measure as above, production of tires is to be started. First, with the tire vulcanizing system 100 shown in Fig. 1, process steps, in the vulcanizer 1, and the PCI 2, respectively, are applied to plural pieces n of the green tires G, tires on a volume production basis, and the product tires S as completed are air-cooled until the same reaches room temperature. RFV values of all the pieces of the product tires at room temperature, in a condition of inflation at a predetermined internal pressure, are measured by the uniformity-testing machine. A primary waveform only is taken out of an RFV waveform, identifying respective positions at two locations, namely, a maximum value position A of RFV, and a minimum value position B of RFV. A mark is affixed to a product tire position corresponding to the maximum value position A. An angle formed between the maximum value position A, and the mark, in the circumferential direction, is found. And data on the angle is kept stored in the memory 22.

Upon completion of a vulcanization process step at the vulcanizer 1, the swingable arm 12 swings clockwise from the standby position W1, stopping directly above the vulcanizer 1. The swingable arm 12 moves down, whereupon the gripper fingers 19A, 19B grip the vulcanized tire K. As the servomotor 18 is servo-locked, the rotation spindle 16 is kept in the stopped condition, so that a deviation from an angular position of the vulcanized tire K does not occur. The swingable arm 12 moves up to thereby remove the vulcanized tire K from the vulcanizer 1. Upon the swingable arm 12 reaching the rise-end thereof, the swingable arm 12 swings clockwise, moving to directly above the receive station U. Prior to this, the up rim 22 in the receive station U has retreated to the retreat position T. The servo-control device 23 rotates the rotation spindle 16 by a predetermined angle on the basis of the data of the memory 22, thereby making positioning of the rotation spindle 16 at an angular position where a rim-fitting position of the double-split rim on the PCI 2 side matches the maximum RFV value of the tire before stopping. The swingable arm 12 moves down to thereby place the vulcanized tire K on the down rim 21, and subsequently, the swingable arm 12 moves up to swing clockwise toward the treatment station R.

When the up rim 22 moves rightward in the direction of X2, reaching directly above the receive station U, the up rim 22 further moves downward in the direction of Y2, thereby securing the vulcanized tire K between the down rim 21, and the up rim 22. Upon completion of the securing of the vulcanized tire K, the inflating process of the vulcanized tire K as just secured is started in the PCI 2. By repeating measurement of the RFV values, and correction of a rotation position of the gripper fingers 19A, 19B, uniformity of the tire vulcanizing system 100 as a whole, including the PCI process, is enhanced.

The present embodiment of the invention is structured such that the gripper fingers 19A, 19B grip the beads on the upper side of the vulcanized tire K, respectively, from the inner side thereof, in the radial direction, however, the present embodiment may be structured such that the gripper fingers 19A, 19B grip tread on the outer periphery of the vulcanized tire K from the outside thereof. Further, with the present embodiment, the up rim 22 retreats by moving in two directions of Y2 and X2, respectively, but may retreat by moving only in the direction of Y2. In such a case, it will be sufficient to increase an amount of retreat in the direction of Y2 in order to avoid interference thereof with the swingable arm 12, and the servomotor 18.

## Claims

1. A tire vulcanizing system comprising a vulcanizer (1) for vulcanizing a green tire (G), a post cure inflator (2), and a transfer device (4) for receiving a vulcanized tire (K) from the vulcanizer (1), and transferring the vulcanized tire (K) to the post cure inflator (2) to be thereby delivered to a rim (21) of the post cure inflator (2);
wherein the transfer device (4) is provided with a means (19A, 19B) for rotatably holding the vulcanized tire (K), and is capable of placing the vulcanized tire (K) on a predetermined rotation position on the rim (21).

2. A tire vulcanizing system according to Claim 1, wherein the predetermined rotation position is a position where a rim-fitting peak value of the rim (21) of the post cure inflator (2) is caused to match an RFV peak value of the vulcanized tire (K).

3. A tire vulcanizing system according to Claim 1 or 2, wherein the transfer device (4) has a pair of holding means (19A, 19B) for holding the vulcanized tire (K), and supports the pair of holding means (19A, 19B) so as to be rotatable centering round a rotation center axis (20) identical to a rotation center axis of the vulcanized tire (K), and to be capable of controlling a rotation angular position, thereby controlling the rotation angular position of the pair of holding means (19A, 19B) to a rotation angular position where the rim-fitting peak value of the rim (21) of the post cure inflator (2) is caused to match the RFV peak value of the vulcanized tire (K).

4. A method for vulcanizing a tire, said method comprising the step of setting an identical reference position to un-vulcanized tires (G), the step of finding a deviation between a maximum value position of RFV of product tires (S), and the reference position, in the circumferential direction, the step of applying a vulcanization process to the un-vulcanized tires (G) in a vulcanizer (I), and the step of rotating respective vulcanized tires (K) on the basis of the deviation to be thereby placed on a rim (21) of a post cure inflator (2).

5. A method for vulcanizing a tire according to Claim 4, wherein in the step of rotating respective vulcanized tires (K) on the basis of the deviation to be thereby placed on the rim (21) of the post cure inflator (2), the respective vulcanized tires (K) are rotated by a rotation angle for causing a rim-fitting peak value of the rim (21) of the post cure inflator (2) to match an RFV peak value of the vulcanized tire (K).

## Patentansprüche

1. Reifenvulkanisierungssystem, das aufweist: einen Vulkanisierapparat (1) für das Vulkanisieren eines Reifenrohlings (G); eine Nachvulkanisationsaufpumpvorrichtung (2); und eine Transportvorrichtung (4) für das Aufnehmen eines vulkanisierten Reifens (K) vom Vulkanisierapparat (1) und das Transportieren des vulkanisierten Reifens (K) zur Nachvulkanisationsaufpumpvorrichtung (2), um dadurch zu einer Felge (21) der Nachvulkanisationsaufpumpvorrichtung (2) geliefert zu werden;
wobei die Transportvorrichtung (4) mit einem Mittel (19A, 19B) für das drehbare Halten des vulkanisierten Reifens (K) versehen ist, und wobei sie in der Lage ist, den vulkanisierten Reifen (K) in einer vorgegebenen Rotationsposition auf der Felge (21) anzuordnen.

2. Reifenvulkanisierungssystem nach Anspruch 1, bei dem die vorgegebene Rotationsposition eine Position ist, wo veranlasst wird, dass sich ein Felgenanpassungsspitzenwert der Felge (21) der Nachvulkanisationsaufpumpvorrichtung (2) an einen RFV-Spitzenwert des vulkanisierten Reifens (K) anpasst.

3. Reifenvulkanisierungssystem nach Anspruch 1 oder 2, bei dem die Transportvorrichtung (4) ein Paar Haltemittel (19A, 19B) für das Halten des vulkanisierten Reifens (K) aufweist und das Paar der Haltemittel (19A, 19B) so hält, dass es sich drehbar um eine Rotationsmittelachse (20) zentriert, die mit einer Rotationsmittelachse des vulkanisierten Reifens (K) identisch ist, und dass es in der Lage ist, die Rotationswinkelposition zu steuern, wodurch die Rotationswinkelposition des Paares der Haltemittel (19A, 19B) in eine Rotationswinkelposition gesteuert wird, wo der Felgenanpassungsspitzenwert der Felge (21) der Nachvulkanisationsaufpumpvornchtung (2) veranlasst wird, sich an den RFV-Spitzenwert des vulkanisierten Reifens (K) anzupassen.

4. Verfahren zum Vulkanisieren eines Reifens, wobei das Verfahren die folgenden Schritte aufweist: Einstellen einer identischen Bezugsposition bei den nicht vulkanisierten Reifen (G); Ermitteln einer Abweichung zwischen einer Maximalwertposition des RFV der Produktreifen (S) und der Bezugsposition in der Umfangsrichtung; Anwenden eines Vulkanisationsprozesses bei den nicht vulkanisierten Reifen (G) in einem Vulkanisierapparat (1); und Drehen der jeweiligen vulkanisierten Reifen (K) auf der Basis der Abweichung, um dadurch auf einer Felge (21) einer Nachvulkanisationsaufpumpvorrichtung (2) angeordnet zu werden.

5. Verfahren zum Vulkanisieren eines Reifens nach Anspruch 4, bei dem beim Schritt des Drehens der jeweiligen vulkanisierten Reifen (K) auf der Basis der Abweichung, um dadurch auf der Felge (21) der Nachvulkanisationsaufpumpvorrichtung (2) angeordnet zu werden, die jeweiligen vulkanisierten Reifen (K) um einen Rotationswinkel gedreht werden, um zu bewirken, dass sich ein Felgenanpassungsspitzenwert der Felge (21) der Nachvulkanisationsaufpumpvorrichtung (2) an einen RFV-Spitzenwert des vulkanisierten Reifens (K) anpasst.

## Revendications

1. Système de vulcanisation d'un bandage pneumatique, comprenant un vulcanisateur (1) pour vulcaniser un bandage pneumatique vert (G), un dispositif de gonflement de post-vulcanisation (2) et un dispositif de transfert (4), pour recevoir un bandage pneumatique vulcanisé (K) du vulcanisateur (1) ; le bandage pneumatique vulcanisé (K) étant transféré vers le dispositif de gonflement de post-vulcanisation (2) pour être ainsi amené vers une jante (21) du dispositif de gonflement de post-vulcanisation (2) ;
dans lequel le dispositif de transfert (4) comporte un moyen (19A, 19B) pour retenir de manière rotative le bandage pneumatique vulcanisé (K) ; et capable de placer le bandage pneumatique vulcanisé (K) dans une position de rotation prédéterminée sur la jante (21).

2. Système de vulcanisation d'un bandage pneumatique selon la revendication 1, dans lequel la position de rotation prédéterminée est une position dans laquelle une valeur maximale d'ajustement sur la jante (21) du dispositif de gonflement de post-vulcanisation (2) est entraînée à correspondre à une valeur maximale de la RFV du bandage pneumatique vulcanisé (K).

3. Système de vulcanisation de bandages pneumatiques selon les revendications 1 ou 2, dans lequel le dispositif de transfert (4) comporte une paire de moyens de retenue (19A, 19B) pour retenir le bandage pneumatique vulcanisé (K), et supporte la paire de moyens de retenue (19A, 19B) de sorte à pouvoir être tournés de manière centrée autour d'un axe de rotation central (20), identique à un axe de rotation central du bandage pneumatique vulcanisé (K) ; et à être capable de contrôler une position angulaire de rotation, contrôlant ainsi la position angulaire de rotation de la paire de moyens de retenue (19A, 19B) afin d'assumer une position angulaire de rotation, dans laquelle la valeur maximale de l'ajustement sur la jante de la jante (21) du dispositif de gonflement de post vulcanisation (2) est entraînée à correspondre à la valeur maximale de la RFV du bandage pneumatique vulcanisé (K).

4. Procédé de vulcanisation d'un bandage pneumatique, ledit procédé comprenant l'étape d'établissement d'une position de référence identique pour des bandages pneumatiques non vulcanisés (G) ; l'étape de détermination d'une déviation entre une position de valeur maximale de la RFV de bandages pneumatiques produits (S) et la position de référence, dans la direction circonférentielle, l'étape d'application d'un processus de vulcanisation aux bandages pneumatiques non vulcanisés (G) dans un vulcanisateur (1), et l'étape de rotation des bandages pneumatique vulcanisés respectifs (K) sur la base de la déviation, en vue de leur positionnement sur une jante (1) du dispositif de gonflement de post-vulcanisation (2).

5. Procédé de vulcanisation d'un bandage pneumatique selon la revendication 4, dans lequel, au cours de l'étape de rotation des bandages pneumatiques vulcanisés respectifs (K) sur la base de la déviation, en vue de leur positionnement sur la jante (21) du dispositif de gonflement de post-vulcanisation (2), les bandages pneumatiques vulcanisés respectifs (K) sont tournés à un angle de rotation pour faire correspondre une valeur maximale de l'ajustement sur la jante (21) du dispositif de gonflement de post-vulcanisation à une valeur maximale de la RFV du bandage pneumatique vulcanisé (K).
